# EUROPEAN PATENT SPECIFICATION

(11) **EP 1 856 882 B1**
(45) Date of publication and mention of the grant of the patent: **27.12.2017**
(21) Application number: 06708995.3
(22) Date of filing: 06.03.2006
(51) Int. Cl.: H04L 29/06, H04Q 3/00

(54) **TRANSFERABILITY OF A NETWORK ADDRESS**
NETZWERKADDRESSUMSETZUNG
TRANSFÉRABILITÉ D'UNE ADRESSE RÉSEAU

(30) Priority: 11.03.2005 FI 20055113
(43) Date of publication of application: 21.11.2007
(73) Proprietor: Telia Company AB, 169 94 Solna (SE)
(72) Inventor: KORHONEN, Jouni, FI-11100 Riihimäki (FI); JALKANEN, Tero, FI-04340 Helsinki (FI)
(74) Representative: Berggren Oy, Tampere
(86) International application number: PCT/FI2006/050091
(87) International publication number: WO 2006/095054

(56) References cited:
- EP-A- 1 278 382
- EP-A1- 1 360 846
- WO-A-02/37788
- US-A1- 2003 007 482

## Description

### Field of the invention

The present invention relates to a method and a network system for directing electronic communication from a transmitting terminal to a receiving terminal, which receiving terminal has transferred from a previous network provider to a new network provider.

### Background of the invention

Due to the increasing number of telephone network providers and their mutual competition, also the motivation of the telephone network users to change network providers has increased. The first network provider changes were implemented in such a manner that a user abandoned the previous phone number in order to replace it with the number from the new network provider. It is obvious that this kind of an arrangement was cumbersome for the users due to the need to inform contacts of the new phone number. This arrangement changed due to the so-called phone number transferability. Transferability means that after a network provider change the user has the possibility to keep the previous phone number by informing it to the new network provider. One implementation example of the transferability of a phone number is described in the publication US 5,890,063. Patent Application US 2003/0007482 A1 provides a simple and secure way of permitting resolution of traditional telephone numbers and other entity/device identifiers into Internet addresses. In the electronic communication taking place in data networks the users are identified on the basis of network addresses, which network addresses also comprise an identifier of the network provider. In communication taking place in data networks, numeric IP-addresses (e.g. 123.456.78.90) or domain / REALM addresses in text form, such as user@network.domain are used. When the user changes network providers, the network address must also be changed. The publication WO 02/37788 A2 addresses this problem and discloses one IP-network solution, wherein the domain address is transferred from one network provider to another without changing this domain address. The publication discloses a redirection server, which has stored the new address corresponding to the previous address. When the previous address is contacted and it is detected that the receiver has changed network providers, the contact is directed to the redirection server, where the new address of the receiver is found, in which case the contact can be directed forward.

The purpose of the present application is to disclose a new solution to transferring network addresses, i.e. domain addresses (such as REALM/Domain). The solution aims for a simple procedure, wherein new servers, such as redirection servers, are not essential, because in the present solution the use and application of previous, existing servers is possible. In addition, the invention is suitable for both wireless and fixed networks, and therefore it supports the convergence between different systems.

### Summary of the invention

The purpose of the invention is to improve the possibility of users to move from one network provider to another. For this purpose, a method and a network system for directing electronic communication from a transmitting terminal to a receiving terminal is provided, which receiving terminal has transferred from a previous network provider to a new network provider. Thus, a request for electronic communication is sent from the transmitting user device to the previous network provider of the receiving user device. When it is detected that the receiving user device has transferred from a previous network provider to a new network provider, said request is sent to the new network provider in order to process electronic communication.

To put it more precisely, the method is characterized in that when the transfer of a receiving user device from a previous network provider to a new network provider is detected, the domain address of the previous network provider included in said request is replaced with the domain address of the new network provider, after which the request is returned and it is indicated that said request must be performed again, in which case the request is directed to the new network provider.

In an example of the invention the domain address of the previous network provider in said request is replaced with the domain address of the new network provider by writing the request again by means of NAPTR (Naming Authority Pointer). NAPTR is described in the IETF document RFC 3403. NAPTR is a way to code rule sets in DNS in such a manner that certain parts in the URI (Uniform Resource Identifier) can be changed and re-determined. The character string according to the Resource Record of NAPTR can be changed in the domain address by software.

In an example either the first or the second network provider determines a domain address of the contact request from a query base. The query base can be located in connection with either network provider. Advantageously in the query base of the previous network provider the domain address of the previous network provider of said request is replaced with said domain address of the new network provider. The query base (SA) is based on a DDDS-system, which uses the domain name system as a distributed database.

The network system is characterized in that when detecting the transfer of a receiving user device from a previous network provider to a new network provider, the previous network provider is arranged to replace the domain address of the previous network provider included in said request with the domain address of the new network provider, as a result of which the address server of the previous network provider is arranged to perform the request again to the new network provider.

In the solution according to the invention the domain address (such as domain or REALM) can be transferred from one network provider to another. This "recycling" makes it possible that the user does not need to worry about informing and sharing the changed, new network address.

The technical implementation of the method according to the invention is straightforward, because no new components or devices are needed to be arranged in the network system, but the existing servers can relatively easily be arranged to implement said method. Because of this, the introduction of the method into use does not require large investments or new infrastructure. Further, because new network components are not added, the amount of signalling between components does not increase either.

### Description of the drawings

The appended drawing together with the more detailed description present an example of the invention, and through them also the other advantages and principles provided by means of the invention.

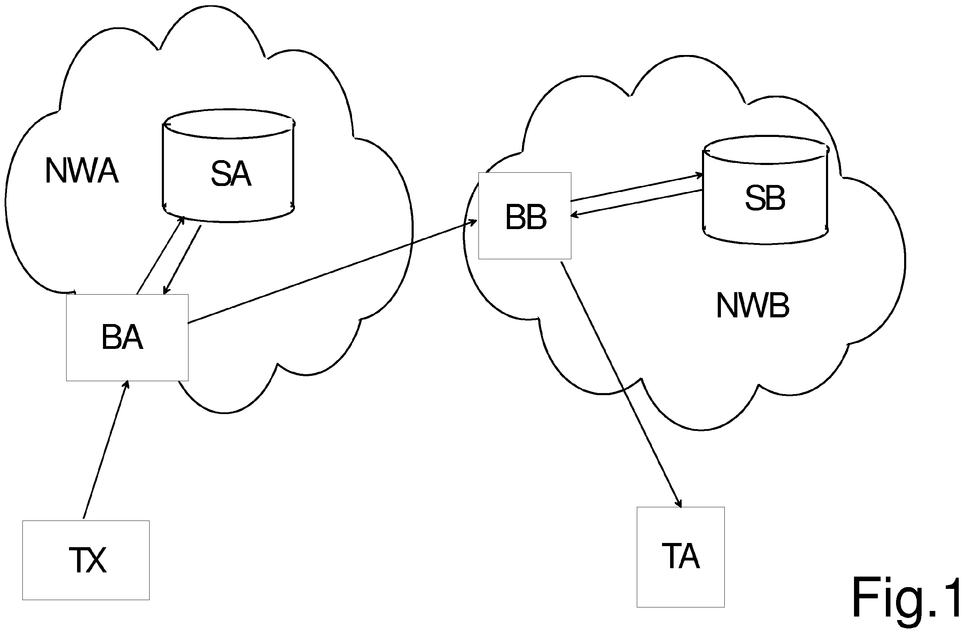

- Fig. 1: shows an example of a network arrangement, which utilizes the method according to the invention.

### Detailed description of the invention

In the following description, certain terms are used for the purposes of clarity, which terms are meant to refer to the example shown in the drawing of the invention, and these terms should not necessarily be interpreted as restrictive to the invention. This example relates to a situation, where the user can be identified in addition to a phone number (MSISDN, Mobile Subscriber international ISDN number) by also an NAI address (Network Access Identifier). Thus, contacts between normal users may take place directly in an address-based manner, and no phone numbers are therefore necessarily required. For example, the VoIP (Voice Over Internet Protocol) / PoC (Push to talk Over Cellular) / rich call services of the IMS (IP Multimedia Subsystem) will operate both in an MSISDN and NAI -based manner. The NAI-address is used to inform the location of the user in certain network environment, and the form of this address is similar to an e-mail address. The NAI-address is also formed of a user part, which identifies an individual node, and a domain part, which determines the network provider. An example of an NAI address is UserA@operatorA.com. The solution according to the invention makes it possible that when the user "UserA" wants to change the network provider from "operatorA" to "operatorB", in addition to the phone number, also the address UserA@operatorA.com is transferred unchanged instead of the user "UserA" having to take a new address UserA@opertorB.com into use.

Figure 1 shows a possible network arrangement with two network providers NWA, NWB. The operator networks of both network providers comprise a query base SA, SB, to which the domain name requests (DNS, Domain Name System) required for relaying contacts can be sent. At least the query base SA in this example utilizes the DDDS-system (Dynamic Delegation Discovery System), which uses DNS as a distributed database for storing different rules. The operation of the DDDS-system is described in more detail, for example, in the IETF documents RFC 3401 to 3404. Each network provider NWA, NWB also comprises address servers BA, BB arranged for relaying functions, which servers make the DNS queries necessary for relaying the contact.

In the invention, the original network provider NWA represents such a network provider, who has provided an address to the user for the first time. This original network provider stores the new address of the user, which is the address in another operator network of that network provider NWB to which the user has changed the original network provider NWA. According to the basic method of the invention, the user can be queried from the original network provider NWA shown by the address TA@NWA.COM, regardless of where the receiving terminal TA actually is located.

In Figure 1 the transmitting terminal TX forms a contact to the address in question TA@NWA.COM. The address server BA makes a DNS-query to the query base SA in order to have the IP-address corresponding to the address TA@NWA.COM. The query base SA detects that the receiving terminal TA has changed network providers and that the new location is on the domain NWB.COM of the network provider NWB. After detecting this, the query base SA is arranged to rewrite the complete domain name (FQDN, Fully Qualified Domain Name) of the previous network provider NWA in the DNS query with the corresponding domain name NWB.COM of the new network provider. The rewriting can be implemented with the NAPTR (Naming Authority Pointer) resource (NAPTR RR):

```
 NWA.COM.
  ;; order pref flags serv regexp replacement
  IN NAPTR 100 10 "" "" "(.*)@.*/\1@NWB.COM/i"
```

It is to be noted that from the above example the "flags" and "serv" specifications have been intentionally left out, because they are not necessarily required to implement the basic idea of this invention. The change of domain name / network is performed, for example, by utilizing the "Regexp" characteristic of the NAPTR.

In this example, the "Regexp" field provides the FQDN-name of that network provider to which the receiving terminal TA has transferred. This NAPTR-response is returned to the maker of the DNS-query by simultaneously indicating that the query should be performed again. With the above-presented NAPTR RR in the operator network the previous network provider NWA can direct the DNS-query to the DNS-servers of the new network provider NWB. As a result of this the network provider NWB can implement its own DNS-query for the client in their own way. In other words, the network provider NWA sets a link to point to the new location where the DNS-query must be made and from where the other information necessary for a contact can be retrieved.

The above-described system and database belonging to it are examples of an implementation of the invention. It is to be noted that this system can be connected to a group of other databases and systems or they may belong to this system. Thus, it is obvious that the other devices boosting the functionality of the system according to the invention connected to this system are in accordance with the spirit of the invention. Thus, it is also obvious that the above-presented detailed description is meant for understanding and it is not necessarily to be interpreted as restrictive to the invention.

## Claims

1. A method for directing electronic communication from a transmitting terminal (TX) to a receiving terminal (TA), which receiving terminal (TA) has transferred from a previous network provider (NWA) comprising a first address server (BA) to a new network provider (NWB) comprising a second address server (BB), the method comprising
- receiving a request for electronic communication with the receiving terminal (TA) from the transmitting terminal (TX) by the first address server (BA) of the previous network provider (NWA) of the receiving terminal (TA), said request including an identifier of the receiving terminal (TA) which includes the domain name of the previous network provider (NWA);
- making a first domain name request to a query base (SA) by the first address server, said first domain request including the identifier of the receiving terminal (TA);
- detecting by the query base (SA) of the previous network provider (NWA) that the receiving terminal (TA) has been transferred from the previous network provider (NWA) to the new network provider (NWB),
- rewriting the domain name of the previous network provider (NWA) included in said first domain name request with the domain name of the new network provider (NWB) by the query base (SA) of the previous network provider (NWA);
- returning the rewritten domain name as a response to the first address server (BA) by the query base (SA); and
- indicating by the query base (SA) to the first address server (BA) that a second domain name request must be directed to the new network provider;
- and directing a second domain name request to the new network provider (NWB), said second domain name request including the identifier of the receiving terminal (TA).

2. The method according to claim 1, wherein the domain name of the previous network provider (NWA) in said first domain name request is rewritten with the domain name of the new network provider (NWB) by means of NAPTR.

3. The method according to claim 1 or 2, wherein the query base (SA) is based on a DDDS-system, which uses the domain name system as a distributed database.

4. A network system for directing electronic communication from a transmitting terminal (TX) to a receiving terminal (TA), which receiving terminal (TA) has transferred from a previous network provider (NWA) comprising a first address server (BA) to a new network provider (NWB) comprising a second address server (BB), wherein
- the first address server (BA) is configured to receive a request for electronic communication with the receiving terminal (TA) from the transmitting terminal (TX), said request including an identifier of the receiving terminal (TA) which includes the domain name of the previous network provider (NWA);
- the first address server (BA) is configured to make a first domain name request to a query base (SA), said first domain request including the identifier of the receiving terminal (TA);
- when detecting the transfer of the receiving terminal (TA) from the previous network provider (NWA) to the new network provider (NWB), the query base (SA) of the previous network provider (NWA) is arranged to rewrite the domain name of the previous network provider (NWA) included in said first domain name request with the domain name of the new network provider (NWB), and to return the rewritten domain name as a response to the first address server (BA), and to indicate to the first address server (BA) that a second domain name request must be directed to the new network provider (NWB);
wherein the first address server (BA) is configured to direct a second domain name request to the new network provider (NWB), said second domain name request including the identifier of the receiving terminal (TA).

5. The network system according to claim 4, wherein the previous network provider is arranged to rewrite the domain name of the previous network provider (NWA) in said first domain name request with the domain name of the new network provider by means of NAPTR.

6. The network system according to claim 4 or 5, wherein the query base (SA) is based on a DDDS-system, which uses the domain name system as a distributed database.

## Patentansprüche

1. Verfahren zum Richten einer elektronischen Kommunikation von einem sendenden Endgerät (TX) zu einem empfangenden Endgerät (TA), wobei das empfangende Endgerät (TA) von einem vorherigen Netzwerkanbieter (NWA), der einen ersten Adressenserver (BA) umfasst, zu einem neuen Netzwerkanbieter (NWB), der einen zweiten Adressenserver (BB) umfasst, gewechselt hat, wobei das Verfahren Folgendes umfasst:
- Empfangen einer Anforderung zur elektronischen Kommunikation mit dem empfangenden Endgerät (TA) von dem sendenden Endgerät (TX) durch den ersten Adressenserver (BA) des vorherigen Netzwerkanbieters (NWA) des empfangenden Endgerätes (TA), wobei die Anforderung einen Identifikator des empfangenden Endgerätes (TA) enthält, der den Domänennamen des vorherigen Netzwerkanbieters (NWA) enthält;
- Stellen einer ersten Domänennamen-Anforderung an eine Abfragebasis (SA) durch den ersten Adressenserver, wobei die erste Domänenanforderung den Identifikator des empfangenden Endgerätes (TA) enthält;
- Detektieren, durch die Abfragebasis (SA) des vorherigen Netzwerkanbieters (NWA), dass das empfangende Endgerät (TA) von dem vorherigen Netzwerkanbieter (NWA) zu dem neuen Netzwerkanbieter (NWB) gewechselt hat,
- Überschreiben des Domänennamens des vorherigen Netzwerkanbieters (NWA), der in der ersten Domänennamen-Anforderung enthalten ist, mit dem Domänennamen des neuen Netzwerkanbieters (NWB) durch die Abfragebasis (SA) des vorherigen Netzwerkanbieters (NWA);
- Zurückmelden des überschriebenen Domänennamens als eine Antwort an den ersten Adressenserver (BA) durch die Abfragebasis (SA); und
- Informieren des ersten Adressenservers (BA) durch die Abfragebasis (SA), dass eine zweite Domänennamen-Anforderung an den neuen Netzwerkanbieter gerichtet werden muss; und
- Richten einer zweiten Domänennamen-Anforderung an den neuen Netzwerkanbieter (NWB), wobei die zweite Domänennamen-Anforderung den Identifikator des empfangenden Endgerätes (TA) enthält.

2. Verfahren nach Anspruch 1, wobei der Domänenname des vorherigen Netzwerkanbieters (NWA) in der ersten Domänennamen-Anforderung mit dem Domänennamen des neuen Netzwerkanbieters (NWB) mittels NAPTR überschrieben wird.

3. Verfahren nach Anspruch 1 oder 2, wobei die Abfragebasis (SA) auf einem DDDS-System basiert, welches das Domänennamensystem als eine verteilte Datenbank verwendet.

4. Netzwerksystem zum Richten einer elektronischen Kommunikation von einem sendenden Endgerät (TX) zu einem empfangenden Endgerät (TA), wobei das empfangende Endgerät (TA) von einem vorherigen Netzwerkanbieter (NWA), der einen ersten Adressenserver (BA) umfasst, zu einem neuen Netzwerkanbieter (NWB), der einen zweiten Adressenserver (BB) umfasst, gewechselt hat, wobei
- der erste Adressenserver (BA) dafür ausgebildet ist, eine Anforderung zur elektronischen Kommunikation mit dem empfangenden Endgerät (TA) von dem sendenden Endgerät (TX) zu empfangen, wobei die Anforderung einen Identifikator des empfangenden Endgerätes (TA) enthält, der den Domänennamen des vorherigen Netzwerkanbieters (NWA) enthält;
- der erste Adressenserver (BA) dafür ausgebildet ist, eine erste Domänennamen-Anforderung an eine Abfragebasis (SA) zu stellen, wobei die erste Domänenanforderung den Identifikator des empfangenden Endgerätes (TA) enthält;
- wenn der Wechsel des empfangenden Endgerätes (TA) von dem vorherigen Netzwerkanbieter (NWA) zu dem neuen Netzwerkanbieter (NWB) detektiert wird, die Abfragebasis (SA) des vorherigen Netzwerkanbieters (NWA) dafür ausgelegt ist, den Domänennamen des vorherigen Netzwerkanbieters (NWA), der in der ersten Domänennamen-Anforderung enthalten ist, mit dem Domänennamen des neuen Netzwerkanbieters (NWB) zu überschreiben, den überschriebenen Domänennamen als eine Antwort an den ersten Adressenserver (BA) zurückzumelden, und den ersten Adressenserver (BA) zu informieren, dass eine zweite Domänennamen-Anforderung an den neuen Netzwerkanbieter gerichtet werden muss (NWB);
wobei der erste Adressenserver (BA) dafür ausgebildet ist, eine zweite Domänennamen-Anforderung an den neuen Netzwerkanbieter (NWB) zu richten, wobei die zweite Domänennamen-Anforderung den Identifikator des empfangenden Endgerätes (TA) enthält.

5. Netzwerksystem nach Anspruch 4, wobei
der vorherige Netzwerkanbieter dafür ausgelegt ist, den Domänennamen des vorherigen Netzwerkanbieters (NWA) in der ersten Domänennamen-Anforderung mit dem Domänennamen des neuen Netzwerkanbieters mittels NAPTR zu überschreiben.

6. Netzwerksystem nach Anspruch 4 oder 5, wobei die Abfragebasis (SA) auf einem DDDS-System basiert, welches das Domänennamensystem als eine verteilte Datenbank verwendet.

## Revendications

1. Un procédé de direction d'une communication électronique d'un terminal d'émission (TX) vers un terminal de réception (TA), ledit terminal de réception (TA) ayant été transféré d'un fournisseur de réseau antérieur (NWA) comprenant un premier serveur d'adresses (BA) vers un nouveau fournisseur de réseau (NWB) comprenant un deuxième serveur d'adresses (BB), le procédé comprenant
- la réception d'une demande relative à une communication électronique avec le terminal de réception (TA) à partir du terminal d'émission (TX) par le premier serveur d'adresses (BA) du fournisseur de réseau antérieur (NWA) du terminal de réception (TA), ladite demande comprenant un identifiant du terminal de réception (TA) qui comprend le nom de domaine du fournisseur de réseau antérieur (NWA),
- l'envoi d'une première demande de nom de domaine à une base d'interrogation (SA) par le premier serveur d'adresses, ladite première demande de nom de domaine comprenant l'identifiant du terminal de réception (TA),
- la détection par la base d'interrogation (SA) du fournisseur de réseau antérieur (NWA) que le terminal de réception (TA) a été transféré du fournisseur de réseau antérieur (NWA) vers le nouveau fournisseur de réseau (NWB),
- la réécriture du nom de domaine du fournisseur de réseau antérieur (NWA) contenu dans ladite première demande de nom de domaine avec le nom de domaine du nouveau fournisseur de réseau (NWB) par la base d'interrogation (SA) du fournisseur de réseau antérieur (NWA),
- le renvoi du nom de domaine réécrit en tant que réponse au premier serveur d'adresses (BA) par la base d'interrogation (SA), et
- l'indication par la base d'interrogation (SA) au premier serveur d'adresses (BA) qu'une deuxième demande de nom de domaine doit être dirigée vers le nouveau fournisseur de réseau,
- et la direction d'une deuxième demande de nom de domaine vers le nouveau fournisseur de réseau (NWB), ladite deuxième demande de nom de domaine comprenant l'identifiant du terminal de réception (TA).

2. Le procédé selon la revendication 1, dans lequel le nom de domaine du fournisseur de réseau antérieur (NWA) dans ladite première demande de nom de domaine est réécrit avec le nom de domaine du nouveau fournisseur de réseau (NWB) au moyen de NAPTR.

3. Le procédé selon la revendication 1 ou 2, dans lequel la base d'interrogation (SA) est basée sur un système DDDS qui utilise le système de noms de domaine en tant que base de données distribuée.

4. Un système de réseau destiné à la direction d'une communication électronique d'un terminal d'émission (TX) vers un terminal de réception (TA), ledit terminal de réception (TA) ayant été transféré d'un fournisseur de réseau antérieur (NWA) comprenant un premier serveur d'adresses (BA) vers un nouveau fournisseur de réseau (NWB) comprenant un deuxième serveur d'adresses (BB), dans lequel
- le premier serveur d'adresses (BA) est configuré de façon à recevoir une demande relative à une communication électronique avec le terminal de réception (TA) à partir du terminal d'émission (TX), ladite demande comprenant un identifiant du terminal de réception (TA) qui comprend le nom de domaine du fournisseur de réseau antérieur (NWA),
- le premier serveur d'adresses (BA) est configuré de façon à envoyer une première demande de nom de domaine à une base d'interrogation (SA), ladite première demande de domaine comprenant l'identifiant du terminal de réception (TA),
- lors de la détection du transfert du terminal de réception (TA) du fournisseur de réseau antérieur (NWA) vers le nouveau fournisseur de réseau (NWB), la base d'interrogation (SA) du fournisseur de réseau antérieur (NWA) est agencée de façon à réécrire le nom de domaine du fournisseur de réseau antérieur (NWA) inclus dans ladite première demande de nom de domaine avec le nom de domaine du nouveau fournisseur de réseau (NWB), à renvoyer le nom de domaine réécrit en tant que réponse au premier serveur d'adresses (BA) et à indiquer au premier serveur d'adresses (BA) qu'une deuxième demande de nom de domaine doit être dirigée vers le nouveau fournisseur de réseau (NWB),
dans lequel le premier serveur d'adresses (BA) est configuré de façon à diriger une deuxième demande de nom de domaine vers le nouveau fournisseur de réseau (NWB), ladite deuxième demande de nom de domaine comprenant l'identifiant du terminal de réception (TA).

5. Le système de réseau selon la revendication 4, dans lequel le fournisseur de réseau antérieur est agencé de façon à réécrire le nom de domaine du fournisseur de réseau antérieur (NWA) dans ladite première demande de nom de domaine avec le nom de domaine du nouveau fournisseur de réseau au moyen de NAPTR.

6. Le système de réseau selon la revendication 4 ou 5, dans lequel la base d'interrogation (SA) est basée sur un système DDDS qui utilise le système de noms de domaine en tant que base de données distribuée.
